# EUROPÄISCHE PATENTSCHRIFT

(11) **EP 0 688 795 B1**
(45) Veröffentlichungstag und Bekanntmachung des Hinweises auf die Patenterteilung: **13.10.1999**
(21) Anmeldenummer: 95108711.3
(22) Anmeldetag: 07.06.1995
(51) Int. Cl.: C08F 8/00, C08F 10/10, C07C 229/24, C08L 23/26

(54) **Polyisobutylene mit Asparaginsäureesterendgruppen**
Polyisobutenes terminated by aspartic acid groups
Polyisobutènes à groupes terminaux d'acide aspartique

(30) Priorität: 20.06.1994 DE 4421556
(43) Veröffentlichungstag der Anmeldung: 27.12.1995
(73) Patentinhaber: BAYER AG, 51368 Leverkusen (DE)
(72) Erfinder: Köhler, Burkhard, Dr., D-47829 Krefeld (DE); Ebert, Wolfgang, Dr., D-47800 Krefeld (DE); Horn, Klaus, Dr., D-41539 Dormagen (DE); Weider, Richard, Dr., D-51381 Leverkusen (DE); Scholl, Thomas, Dr., D-51469 Bergisch Gladbach (DE)

(56) Entgegenhaltungen:
- WO-A-92/11297
- DE-A- 3 643 792
- DE-A- 3 643 818
- DE-A- 3 804 184
- DE-A- 3 804 185
- CHEMICAL ABSTRACTS, Band 85, Nr. 24, 13. Dezember 1976, Columbus, Ohio, USA S. EBIHARA et al. "Graft Copolymerization Of Amino Acids" Seite 31, Nr. 178 417j; & JP-A-07 654 694

## Beschreibung

Die vorliegende Erfindung betrifft Polyisobutylene mit Asparaginsäureesterendgruppen und ein Verfahren zu ihrer Herstellung. Die erfindungsgemäßen Polyisobutylene sind bezüglich Estergruppen tetrafunktionell, bezüglich sekundärer Aminogruppen difunktionell und bezüglich tertärer N-Alkyl-Aminogruppen ebenfalls difunktionell.

Asparaginsäureesterendgruppen schließen N-Alkyl-asparaginsäureesterendgruppen ein.

Die erfindungsgemäßen, funktionellen Polyisobutylene sind beispielsweise als Bausteine für Blockpolykondensate gut geeignet. Man nennt derartige funktionelle Polymere auch Telechele (zum Begriff "Telechele" siehe Römpp Chemie Lexikon, 9. Auflage, Band 6, Seite 4 485).

Polyfine mit funktionellen Endgruppen sind bekannt.

So sind beispielsweise aus der DE-B- 1 162 559 Polyolefine mit endständigen Hydroxylgruppen bekannt.

Aus der DE-A- 3 618 378 (Le A 24 330) sind Polyolefincarbonsäuren bekannt.

Aus der EP-A- 305 718 sind Polyisobutylene bekannt, die endständige Carbonsäure-, Carbonsäurehalogenid- oder Carbonsäureester-Gruppen haben. auch diese Polyisobutylene werden als Telechele bezeichnet.

Aus der DE-A- 4 122 655 (Le A 28 403) beziehungsweise dem US-A- 5 274 182 sind ebenfalls endfunktionalisierte Isobutylenpolymere bekannt, die 1.8 bis 2.5 Mol reaktive Gruppen pro Mol Polymer enthalten (Seite 3, Zeile 4 der DE-A). Als funktionelle Gruppen dienen unter anderem -NH₂ oder primäre Amino-Gruppen.

Die DE-A-38 04 184 offenbart Asparaginsäure-funktionalisierte Polymere, die durch Erhitzen hergestellt werden. In dieser Schrift wird eine thermische, radikalische und damit unspezifische Addition an verschiedene Polymere beschrieben unter denen auch Polyisobutylen erwähnt ist.

Es bestand nun die Aufgabe, Isobutylenpolymere mit drei oder mehr reaktiven Endgruppen bereitzustellen, um daraus Blockpolycondensate mit verzweigter Struktur gewinnen zu können.

Gegenstand der vorliegenden Erfindung ist nun ein Verfahren zur Herstellung von Polyisobutylenen mit Asparaginsäureesterendgruppen oder mit N-alkyl-asparaginsäureesterendgruppen, das dadurch gekennzeichnet ist, daß man α,ω-Diamino-polyisobutylene oder α,ω-Di-(alkylamino)-polyisobutylene mit Äthylen-α,β-dicarbonsäuredialkylestern, worin die Doppelbindung in cis- oder trans-Konfiguration vorliegen kann, in Molverhältnissen zwischen 1:2 und 1:30 Polyisobutylen zu Äthylendicarbonsäuredialkylester, bei Temperaturen von 30°C bis 140°C mit oder ohne Lösungsmittel umsetzt.

Gegenstand der vorliegenden Erfindung sind außerdem Polyisobutylene mit Asparaginsäureesterendgruppen oder mit N-Alkyl-asparaginsäureesterendgruppen, die nach obigem Verfahren lierstellbar sind.

Die α,ω-Diamino-polyisobutylene beziehungsweise die α,ω-Di-(alkylamino)-polyisobutylene haben mittlere Zahlenmittelmolekulargewichte von 800 bis 12 000, vorzugsweise von 1 200 bis 7 000 und sind literaturbekannt oder nach literaturbekannten Verfahren herstellbar (siehe DE-A- 4 122 655 beziehungsweise US-A- 5 274 182).

Bevorzugte α,ω-Diamino- beziehungsweise α,ω-Di-(alkylamino)-polyisobutylene sind solche der Formel (I) 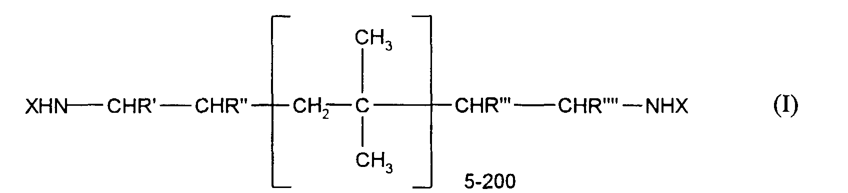 worin R', R", R"' und R"" für Wasserstoff oder eine C₁-C₃-Alkylgruppe stehen und mindestens zwei dieser Reste R' bis R"" Wasserstoff bedeuten und worin X H oder C₁-C₁₆-Alkyl ist.

Geeignete α,ω-Diamino- beziehungsweise α,ω-Di-(alkylamino)-polyisobutylene sind beispielsweise die in den Beispielen 2, 4 und 5 der DE-A- 4 122 655 beziehungsweise des US-Patents 5 274 182 hergestellten und beschriebenen Produkte.

Der zweite Reaktionspartner des erfindungsgemäßen Verfahrens, die Äthylen-α,β-dicarbonsäuredialkylester sind ebenfalls literaurbekannt, nämlich als Fumarsäureester beziehungsweise als Maleinsäureester, wobei die Alkylester-Reste C₁-C₂₂-Alkyl-Reste sein können. Somit entsprechen die Ethylendicarbonsäuredialkylester vorzugsweise der Formel (II).

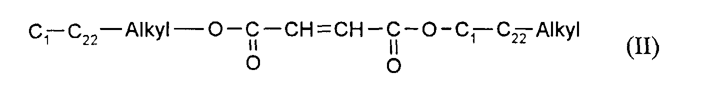

Das erfindungsgemäße Verfahren entspricht dem einer Michael-Addition und ist somit bezüglich seiner Reaktionsbedingungen ebenfalls bekannt.

Geeignete Lösungsmittel sind aliphatische oder aromatische Kohlenwasserstoffe, wie z.B. Toluol, Xylol, Mesitylen, Octan, Decan, Cyclohexan, oder halogenierte Kohlenwasserstoffe, wie z.B. Chlorbenzol, o-Dichlorbenzol, o-Chlortoluol.

Die Isolierung der erfindungsgemäß erhältlichen Polyisobutylene mit Asparaginsäureesterendgruppen oder mit N-Alkyl-asparaginsäureesterendgruppen erfolgt durch Abdestillieren des Lösungsmittels und/oder des überschüssigen Äthylen-α,β-dicarbonsäuredialkylesters.

Erfindungsgemäß bevorzugt erhältliche Polyisobutylene sind solche der Formel (III) 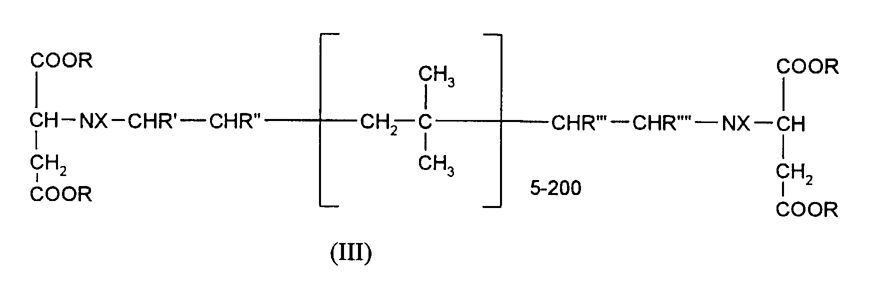 worin R', R", R"' und R"" H oder C₁-C₃-Alkyl sind, wobei mindestens zwei dieser Reste R' bis R"" H bedeuten, worin X H oder C₁-C₁₆-Alkyl ist und worin R C₁-C₂₂-Alkyl ist.

Die erfindungsgemäßen Polyisobutylene eignen sich, wie bereits angesprochen, als Bausteine beziehungsweise als Modifikatoren für umesterungsfähige oder umamidierungsfähige Polykondensate, vorzugsweise als Modifikatoren für thermoplastische, aromatische Polycarbonate. Die Modifizierung der thermoplastischen aromatischen Polycarbonate kann in der Schmelze in Extrudern oder Knetern erfolgen bei Temperaturen zwischen 110°C und 320°C und gegebenenfalls unter Verwendung von Katalysatoren wie beispielsweise DABCO, Tetramethylguanidin, Diazabicycloundecen und Diazabicyclononen.

Gegenstand der vorliegenden Erfindung ist somit auch die Verwendung der erfindungsgemäßen Polyisobutylene mit Asparaginsäureesterendgruppen oder mit N-Alkyl-asparaginsäureesterendgruppen zur Modifizierung von thermoplastischen aromatischen Polycarbonaten.

Hierbei erweisen sich diese modifizierten, thermoplastischen aromatischen Polycarbonate als farbheller als vergleichbare, die mit Polyisobutylenen modifiziert sind, die Methylamino-Endgruppen gemäß DE-A- 4 122 655 beziehungsweise US-A- 5 274 182 tragen. Dieser Effekt war nicht vorhersehbar.

Die erfindungsgemäß modifizierten, thermoplastischen, aromatischen Polycarbonate lassen sich in üblicher Weise isolieren und granulieren.

Die erfindungsgemäß modifizierten, thermoplastischen, aromatischen Polycarbonate lassen sich auf üblichen Apparaturen zu beliebigen Formkörpern wie Teile für den Automobilbau, wie z.B. Karosserieteilen oder Stoßstangen, oder Schutzhelmen oder Haushaltsartikeln, wie z.B. Staubsaugergehäusen, oder Einrichtungsgegenständen, wie z.B. Spülen verarbeiten.

Diese Formkörper zeigen somit technische Brauchbarkeit beispielsweise überall dort, wo eine höhere Beständigkeit gegen Kohlenwasserstoffe gefordert wird.

Die erfindungsgemäß modifizierten aromatischen Polycarbonate lassen sich noch mit reaktionslosen Polyisobutylen abmischen.

Gegenstand der vorliegenden Erfindung sind somit auch Mischungen aus
A) 75-99 Gew.-%, vorzugsweise 85-97 Gew.-% der erfindungsgemäß modifizierten, thermoplastischen, aromatischen Polycarbonate und
B) 1-25 Gew.-%, vorzugsweise 3-15 Gew.-% an reaktionslosen Polyisobutylenen.

Reaktionslose Polyisobutylene gemäß Komponente B) der erfindungsgemäßen Mischungen sind kationische Polymerisate von Olefinen und gegebenenfalls Dienen mit einem Gehalt von mindestens 85 % Isobutylen. Polyisobutylene sind unter dem Stickwort "Polyisobutylene" auf Seite 3539, Band 5, in Römpp Chemie Lexikon, 9. Auflage, 1992, Georg Thieme Verlag beschrieben. Die Molmasse der erfindungsgemäß zu verwendeten 10 000 bis 1 200 000 g/mol. Diese wird ermittelt durch Lichtstreuung.

Als Comonomere für Isobutylen geeignete Diene sind beispielsweise Butadien, Isopren, 2-Chlorbutadien-(1,4), 2-Brombutadien-(1,3), Pentadien, Hexadien, 2-Ethylbutadien-(1,3),2-Propylbutadien-(1,3),2-Phenylbutadien-(1,3), 2-Methylpentadien-(1,3) oder 3-Propylhexadien. Andere geeignete olefinische Comonomere sind Styrol, α-Methylstyrol, m/p-Methylstyrol oder Divinylbenzol.

Die Herstellung der erfindungsgemäßen Mischungen erfolgt in bekannter Weise in der Schmelze bei Temperaturen zwischen 200°C und 320°C in Extrudern oder Knetern oder durch Mischen und gemeinsames Eindampfen der Lösungen der Komponenten in Ausdampfextrudern bei 150°C bis 320°C. Die Mischungen lassen sich danach in bekannter Weise isolieren und granulieren.

Die Verarbeitung zu Formkörpern sowie der technische Einsatz derartiger Formkörper aus den erfindungsgemäßen Mischungen erfolgt im wesentlichen wie für die erfindungsgmäß modifizierten, thermoplastischen, aromatischen Polycarbonate vorstehend angegeben.

### Beispiele

### Beispiel 1

Man läßt die Mischung aus 50 ml Maleinsäurediethylester und 118 g eines α,ω-Diaminopolyisobutylens, der Molmasse 3 500 g/Mol, hergestellt gemäß Beispiel 2 der DE-A- 4 122 655 beziehungsweise gemäß Beispiel 2 des US-PS 5 274 182 über Nacht bei 20°C stehen und erhitzt dann eine Stunde auf 100°C. Dann wird der überschüssige Maleinsäurediethylester im Vakuum (20 hPa) abdestilliert. Die Ausbeute an Polyisobutylen mit Asparaginsäurediethylesterendgruppen ist quantitativ.

### Beispiel 2 (Verwendungsbeispiel)

Man löst 100 g des Polyisobutylens mit Asparaginsäurediethylesterendgruppen des Beispiels 1 in 900 g Chlorbenzol und 1 900 g Homopolycarbonat aus 2,2-Bis(4-hydroxyphenyl)-propan mit einem ηᵣₑₗ (gemessen in CH₂Cl₂ bei 25°C und einer Konzentration von 0,5 g in 100 ml CH₂Cl₂) von 1,28 in einem Gemisch aus 3 1 Chlorbenzol und 81 Methylenchlorid, mischt die Lösungen und dampft sie mit dem Ausdampftextruder (ZSK 32 mit Vakuumdom) bei 280°C ein. Das erhaltene modifizierte Polycarbonat hat die folgenden Eigenschaften: Zäh-spröd-Übergang des Bruches im Kerbschlagversuch bei -20°C. Ein Stab der Abmessung 80x10x4 mm wird auf eine Randfaserdehnung von 0,6 % gespannt und 2 min einer Mischung Isooctan/Toluol 1:1 ausgesetzt. Die Probe zeigt keine Risse (unmodifiziertes PC bricht unter diesen Bedingungen). Die Farbe des Compounds ist hellgelb.

### Beispiel 3 (Verwendungsbeispiel, Vergleich)

Man löst 100 g eines im wesentlichen difunktionellen Methylamino-terminierten Polyisobutylentelechels mit einer NH-Zhl von 29, erhältlich gemäß Beispiel 5 der DE-A- 4 122 655 beziehungsweise der US-A- 5 274 182 in 900 g Chlorbenzol und 1 900 g Homopolycarbonat des vorstehenden Beispiels 2 in einem Gemisch aus 3 1 Chlorbenzol und 8 l CH₂Cl₂, mischt die Lösungen und dampft sie gemäß vorstehendem Beispiel 2 ein. Das erhaltene modifizierte Polycarbonat hat die folgenden Eigenschaften: Zäh-Sprödübergang des Bruches im Kerbschlagversuch bie -20°C. Ein Stab der Abmessung 80x10x4 mm wird auf eine Randfaserdehnung von 0,6 % gespannt und 2 min einer Mischung Isooctan/Toluol 1:1 ausgesetzt. Die Probe zeigt keine Risse. Die Farbe des Compounds ist hellbraun-braun.

## Patentansprüche

1. Verfahren zur Herstellung von Polyisobutylenen mit Asparaginsäureesterendgruppen oder mit N-alkyl-asparaginsäureesterendgruppen, dadurch gekennzeichnet, daß man α,ω-Diamino-polyisobutylene oder α,ω-Di-(alkylamino)-polyisobutylene mit Äthylen-α,β-dicarbonsäuredialkylestern in Molverhältnissen zwischen 1:2 und 1:30, Polyisobutylen zu Äthylendicarbonsäuredialkylester, bei Temperaturen von 30° bis 140°C mit oder ohne Lösungsmittel umsetzt.

2. Polyisobutylene mit Asparaginsäureesterendgruppen oder mit N-Alkyl-asparaginsäureesterendgruppen, herstellbar nach dem Verfahren gemäß Anspruch 1.

3. Verwendung der Polyisobutylene des Anspruchs 2 zur Modifizierung von thermoplastischen, aromatischen Polycarbonaten.

4. Mischungen aus
A) 75-99 Gew.-%, vorzugsweise 85-97 Gew.-% der gemäß Anspruch 3 erhältlichen modifizierten, thermoplastischen, aromatischen Polycarbonate und
B) 1-25 Gew.-%, vorzugsweise 3-15 Gew.-% an reaktionslosen Polyisobutylenen.

## Claims

1. Process for the preparation of polyisobutylenes having aspartic acid ester terminal groups or having N-alkylaspartic acid ester terminal groups, characterised in that α,ω-diaminopolyisobutylenes or α,ω-di-(alkylamino)polyisobutylenes are reacted with ethylene-α,β-dicarboxylic acid dialkylesters in molar ratios of polyisobutylene to ethylene dicarboxylic acid dialkylester of between 1 : 2 and 1 : 30, at temperatures of from 30°C to 140°C with or without solvent.

2. Polyisobutylenes having aspartic acid ester terminal groups or having N-alkylaspartic acid ester terminal groups and preparable by the process according to Claim 1.

3. Use of the polyisobutylenes of Claim 2 to modify thermoplastic aromatic polycarbonates.

4. Mixtures of
A) from 75 to 99 wt.%, preferably from 85 to 97 wt.%, of the modified, thermoplastic aromatic polycarbonates obtainable according to Claim 3, and
B) from 1 to 25 wt.%, preferably from 3 to 15 wt.%, of non-reacting polyisobutylenes.

## Revendications

1. Procédé de préparation de polyisobutylènes à groupes terminaux ester d'acide aspartique ou à groupes terminaux ester d'acide N-alcoylaspartique, caractérisé en ce que l'on fait réagir, à des températures allant de 30°C à 140°C, avec ou sans solvant, un α,ω-diaminopolyisobutylène ou un α,ω-di(alcoylamino)polyisobutylène avec des diesters alcoyliques de diacide éthylène-α,β-carboxylique, en des rapports molaires du polyisobutylène au diester alcoylique de diacide éthylènecarboxylique allant de 1:2 à 1:30.

2. Polyisobutylène à groupes terminaux ester d'acide aspartique ou à groupes terminaux ester d'acide N-alcoylaspartique, pouvant être préparé par le procédé suivant la revendication 1.

3. Utilisation du polyisobutylène suivant la revendication 2, pour modifier des polycarbonates aromatiques, thermoplastiques.

4. Mélanges constitués de :
A) 75 à 99% en poids, de préférence 85 à 97% en poids des polycarbonates aromatiques thermoplastiques modifiés, pouvant être obtenu suivant la revendication 3, et
B) 1 à 25% en poids, de préférence de 3 à 15% en poids de polyisobutylènes inertes.
